Europäisches Patentamt

European Patent Office

Office européen des brevets

(11) Publication number: **0 107 511**
**B1**

(12) **EUROPEAN PATENT SPECIFICATION**

(45) Date of publication of patent specification: **20.01.88**

(21) Application number: **83306508.9**

(22) Date of filing: **26.10.83**

(51) Int. Cl.⁴: **H 01 B 1/14, C 04 B 35/10 // F23Q7/00, H05B3/14**

(54) Electroconductive ceramics.

(30) Priority: **27.10.82 JP 187598/82**

(43) Date of publication of application:
**02.05.84 Bulletin 84/18**

(45) Publication of the grant of the patent:
**20.01.88 Bulletin 88/03**

(84) Designated Contracting States:
**DE GB**

(56) References cited:
**EP-A-0 026 750**
**DE-A-3 027 401**
**GB-A- 834 739**
**US-A-3 027 332**

(73) Proprietor: **HITACHI, LTD.**
**6, Kanda Surugadai 4-chome Chiyoda-ku Tokyo 100 (JP)**

(72) Inventor: **Matsushita, Yasuo**
**Corpo. Tatenuma 304-go**
**2-15 Jonancho-2-chome Hitachi-shi (JP)**
Inventor: **Nakamura, Kousuko**
**1-39 Ishinazakacho-1-chome Hitachi-shi (JP)**
Inventor: **Kosugi, Tetuo**
**2478-8 Ishigamiuchijuku Tokaimura Naka-gun Ibaraki-ken (JP)**

(74) Representative: **Calderbank, Thomas Roger et al**
**MEWBURN ELLIS & CO. 2/3 Cursitor Street London EC4A 1BQ (GB)**

Courier Press, Leamington Spa, England.

## Description

This invention relates to the use of an electroconductive sintered ceramic material as a heater material.

Materials such as silicon carbide (SiC), lanthanum chromate (LaCrO₃) and zirconia (ZrO₂) are known as electroconductive ceramic materials. US—A—3027332, for example, discloses ceramic materials consisting of 35 to 99% by weight of the material of a silicide component, and 1 to 65% by weight of the material of an oxide component. These electroconductive ceramic materials, however, have a relatively high electrical resistance which does not become less than about $10^{-4}$ $\Omega$m even when heated at a temperature as high as 1,000°C. Also, some of these ceramic materials have negative resistance-temperature characteristics, that is, their electrical resistance decreases as the temperature increases, so that when heated at a high temperature, they tend to cause a thermorunaway due to a sharp increase of electric current, making the temperature control very difficult. Further, these ceramic materials are usually porous and hence low in mechanical strength. Other ceramic materials disclosed in US—A—3027332 have a positive resistance-temperature characteristic.

The present invention seeks to obtain a ceramic material for use as a heating material which overcomes, or at least ameliorates the problems associated with the known heating materials. It does this by using an electroconductive sintered ceramic material as a heater ceramic for ignition or gasification, which ceramic material comprises:

(a) 5 to 70 parts by weight of alumina or an aluminous ceramic containing at least 95% by weight of Al₂O₃, and

(b) 30 to 95 parts by weight of an inorganic compound which exhibits a positive resistance-temperature coefficient, and which is selected from the group consisting of ZrB₂, ZrC, ZrN, TaB₂, TaC, TaN, TiB₂, TiC and TiN.

It has been found that the use of such materials as heater materials enables a high mechanical strength to be obtained. The ceramic materials have a low electrical resistance and a positive resistance-temperature coefficient.

Preferably, the ceramic material has an electrical resistivity of $10^{-2}$ $\Omega$m or below at room temperature and a positive resistance-temperature coefficient.

A ceramic material consisting of 68 parts by weight of Al₂O₃, 26 parts by weight of TiN, and 6 parts by weight of ZrC is disclosed in DE—A—3027401. However, this document is concerned with the use of ceramic materials in a cutting tool, and the specific example mentioned above, was given as a comparison example, and was unsuitable for the use discussed.

Electroconductive ceramic materials for use in heaters comprising ZrB₂, TiB₂, TiN, ZrN, TaC, ZnC, and a matrix of SiC are discussed in EP—A—0095720. However, this document was published after the priority date of the present invention, and therefore this document falls under the provisions of Article 54(3) of the European Patent Convention.

Embodiments of the invention will now be described in detail, by way of example, with reference to the accompanying drawings, in which:

Fig. 1 is a graph showing the relation between resistivity and mixed amount of an electronconductive additive in one of the electroconductive alumina composite ceramics according to this invention.

Fig. 2 is a graph showing the relation between resistance-temperature coefficient and mixed amount of the additive in said ceramics.

Fig. 3(a) is a plane view of an embodiment of the heater and (b) is a cross-sectional view thereof.

Fig. 4 is a characteristic diagram showing the performance of said heater.

First, an electroconductive ceramic material is provided by dispersing an electroconductive non-oxide material having the properties analogous to those of metals into alumina only or into an aluminous ceramic phase mainly composed of Al₂O₃. Then the mixture is densely sintered.

Not all electroconductive substances having a positive resistance-temperature coefficient are effective in this invention. For example, an electroconductive ceramic material containing a metal powder added thereto has a desired resistance-temperature characteristic but it is poor in oxidation resistance at a high temperature. Therefore, such an electroconductive ceramic material is not suitable as a heater material for a glow plug.

The electroconductive non-oxide materials used in this invention may be carbides, nitrides, or borides and of Groups IVa and Va of the Periodic Table, for example, zirconium compounds such as zirconium boride (ZrB₂), zirconium carbide (ZrC), and zirconium nitride (ZrN), tantalum compounds such as tantalum boride (TaB₂), tantalum carbide (TaC), and tantalum nitride (TaN), and titanium compounds such as titanium boride (TiB₂), titanium carbide (TiC) and titanium nitride (TiN). These compounds are suitable for use as the electroconductive material in this invention because they have a positive resistance-temperature coefficient and are low in electrical resistance, scarcely fusible, high in high-temperature strength, and excellent in acid resistance.

On the other hand, alumina is known as a typical ceramic material having a negative resistance-temperature coefficient ($-4.995\times$deg$^{-1}\cdot10^3$). The abovementioned electroconductive materials have a melting point of not lower than 2,000°C and a resistivity not higher than $10^{-6}$ $\Omega$m. The addition of the abovementioned electroconductive materials having a positive resistance-temperature coefficient to alumina or aluminous ceramics make the alumina or aluminous ceramics, which are inherently electrically insulative, electrically conductive. The use of these electroconductive ceramic materials as a heater material prevents current runaway and makes it easy to control current and keep the surface temperature of a heater constant.

To the alumina or aluminous ceramics used in this invention, there may be added a sintering aid for alumina and a particle growth regulator in a total amount not exceeding 5% by weight based on the amount of $Al_2O_3$. As the sintering aid, there may be used, for example, at least one of MgO, $SiO_2$, CaO, $Li_2O$, $TiO_2$ and etc., and as the particle growth regulator, one may use MgO. The reason for the selection of alumina or aluminous ceramics as the matrix phase in this invention is that alumina has a high heat resistance, a high mechanical strength and an excellent acid resistance and also its thermal expansion coefficient is either almost equal to or relatively close to those of said compounds used as the electroconductive material in this invention, such as $ZrB_2$, ZrC, ZrN, $TaB_2$, TaC, TaN, $TiB_2$, TiC, and TiN, so that alumina provides the best combination with said electroconductive material, and also when, for instance, the product of this invention is used as a high-temperature heater material, it exhibits a high endurance against heat shock given when instantaneously red heated by supplying electric current.

The electroconductive ceramic material used in this invention can be produced, for example, by first mixing an $Al_2O_3$ powder with an electroconductive material mentioned above in amounts of 5—70 parts by weight and 30—95 parts by weight, respectively, adding thereto a molding binder such as carboxymethyl cellulose (CMC) or polyvinyl alcohol (PVA), preferably in an amount of 10—20 parts by weight, molding the mixture into a desired shape, and sintering the molding under vacuum or in an inert gas such as argon or nitrogen gas at a temperature within the range of 1,400 to 1,700°C, but preferably 1500 to 1600°C, to form a sintered body having a theoretical relative density not less than 80%, and especially above 90%.

In this invention, the amount of alumina or aluminous ceramic mainly composed of $Al_2O_3$, and the amount of an electroconductive material mixed are defined as being in the abovementioned proportion for the following reasons: if the amount of the electroconductive material mixed is less than 30 parts by weight, the electrical resistivity of the produced ceramic material will be greater than 1 Ωcm and also the resistance-temperature coefficient of the ceramic material will be negative, while if the amount of said electroconductive material mixed exceeds 95% by weight, the produced ceramic material will have poor mechanical strength and heat shock resistance.

As illustrated in detail in the following examples, it is possible to obtain electroconductive composite ceramic materials having a desired resistivity within the range of 10 to $10^{-7}$ $\Omega \cdot m$ by properly adjusting the amount of the electroconductive material mixed. Also, the ceramic materials have a positive resistance-temperature characteristic so that there is no danger of fusing due to current runaway, i.e., due to the generation of an out-of-control current, even when in a red hot state. Further, the ceramic materials used in this invention have a high density and a high mechanical strength and are also excellent in endurance to the repeated supply of electric current and in thermal shock resistance.

Owing to these excellent properties, the electroconductive ceramic materials are used in various types of heaters; for example, glow plug heaters or electrical gas ignitors which make use of its rapid heating characteristic, and kerosine gasifying burners.

This invention will now be described in further detail with reference to some examples thereof.

Example 1

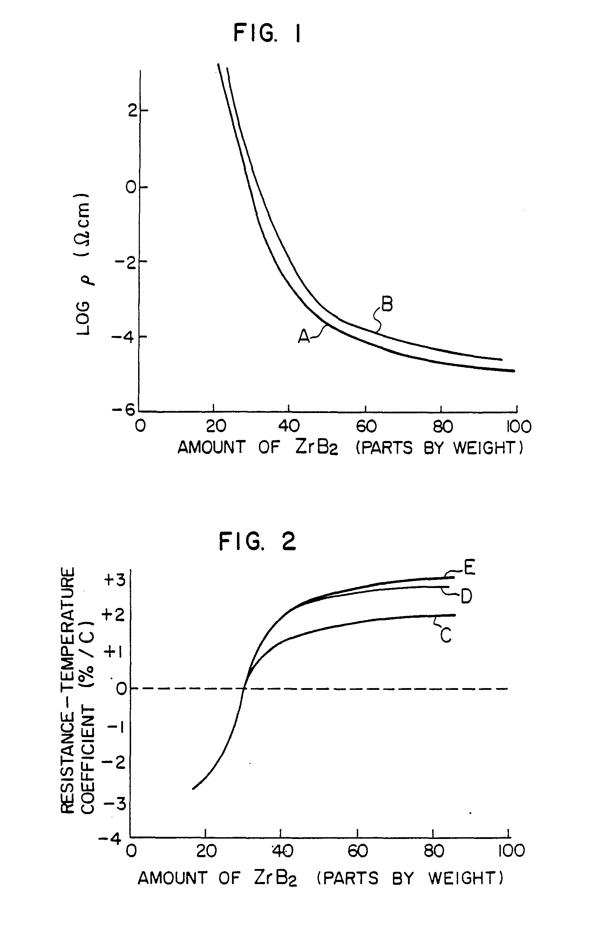

An $Al_2O_3$ powder having an average particle size of 0.5 μm and a $ZrB_2$ powder having an average particle size of 2 μm were mixed in various ratios, and to each mixture was added a 3% PVA solution in an amount of 10% based on the whole amount of the mixture, followed by mixing by a stirring kneader. Then the mixed powder was molded under a pressure of $9.80 \times 10^7$ $Nm^{-2}$ (1,000 kg/cm²). This molding was then placed in a graphite-made die and subjected to hot press sintering in a vacuum of 0.13 to $1.3 \times 10^{-3}$ $Nm^{-2}$ ($10^{-3}$ to $10^{-5}$ Torr) under the conditions of $1.95 \times 10^7$ $Nm^{-2}$ (200 kg/cm²) and 1,700°C for 1 hour. The $Al_2O_3/ZrB_2$ composite ceramic material thus obtained was a dense sintered body having a theoretical relative density above 95%. The relation between the resistivity of the ceramic material and the amount of $ZrB_2$ was found as shown by curve A in Fig. 1. From Fig. 1 it is found possible to obtain a ceramic material having a desired resistivity within the range of 10 to $10^{-7}$ $\Omega \cdot m$ by suitably selecting the amount of $ZrB_2$ to be not less than 20 parts by weight. The resistance-temperature coefficient as determined from the resistivity/temperature relation of the ceramic material was found to be as shown by curve D in Fig. 2, which indicates that the ceramic material has a positive resistance-temperature coefficient when the amount of $ZrB_2$ mixed is greater than about 30 parts by weight.

Example 2

ZrC and ZrN powders (each having an average particle size of 2 μm) were each mixed in various amounts with the $Al_2O_3$ used in Example 1, and the mixtures were molded and hot-press sintered under the same conditions as Example 1 to prepare $Al_2O_3$-ZrC and $Al_2O_3$-ZrN composite ceramic materials. The relation between the resistivity and amount of electroconductive material of both types of composite ceramic material was substantially that shown by curve A in Fig. 1. Ceramic materials having a positive resistance-temperature characteristic were obtained when the mixed amount of ZrC or ZrN was greater than about 30 parts by weight as in the case of Example 1.

## Example 3

50 parts by weight of an $Al_2O_3$ powder (average particle size: 0.5 µm) and 50 parts by weight of a $ZrB_2$ powder (average particle size: 2 µm) were mixed, and to this mixture were added an AlN powder (average particle size: 2 µm) and an MgO powder (average particle size: 2 µm) in amounts of 2% by weight and 0.5% by weight, respectively, based on the total amount of the mixture. The mixed powder was compression molded under a pressure of $9.80 \times 10^7$ $Nm^{-2}$ (1,000 kg/cm²) and then hot press sintered under the conditions of $1.95 \times 10^7$ $Nm^{-2}$ (200 kg/cm²), and 1,600°C for one houre (retention time) to form a composite ceramic material. It had a theoretical relative density of 95%, a resistivity of $2 \times 10^{-5}$ Ωm at room temperature, a resistance-temperature coefficient (20—500°C) of +2.3%/°C and a bending strength of $2 \times 10^7$ kg m$^{-2}$. This product was thus dense, high in mechanical strength and low in electrical resistance.

## Example 4

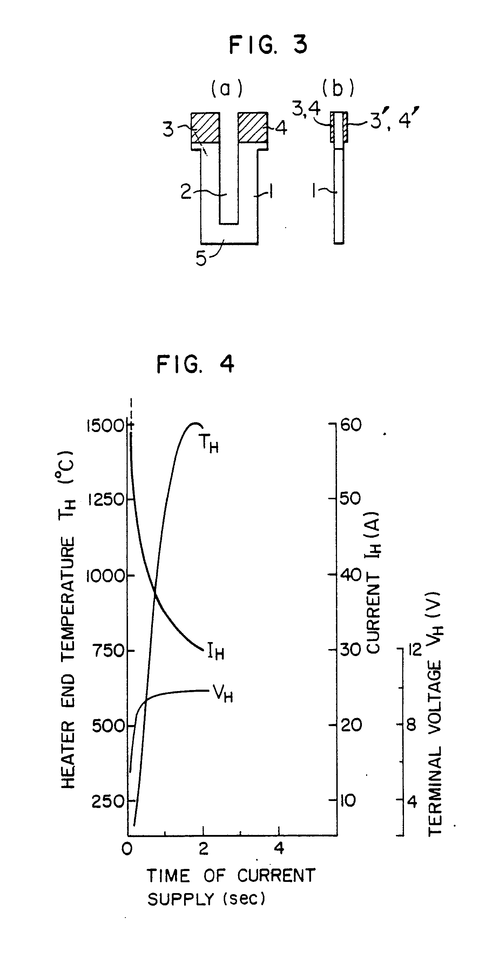

A U-shaped heater (resistance: 0.1 Ω; resistivity: $4 \times 10^{-5}$ Ωm) as shown in Fig. 3(a) and (b) was made by using the electroconductive ceramic material obtained in Example 3. The heater terminal voltage $V_H$, current $I_H$, and the temperature $T_H$ of the end (5) of the heater—which becomes red hot on heating—at the time of application of a DC voltage of 12 V to the terminals 3 and 4 of this heater are shown in Fig. 4. As seen from this graph, the heater end temperature rose to 900°C in about 0.7 second, 1,200°C in about one second and 1,500°C in about 1.5 seconds indicating the rapid heating characteristic of the heater. The ceramic material also showed a positive resistance-temperature characteristic, that is, the current applied to the heater decreases as the heater temperature rises. This is a particularly advantageous property in a heater material because it helps to prevent fusing of the heater or other troubles due to thermorunaway.

Also, the heater according to this Example showed absolutely no change of resistivity even after 100,000 cycles of repeated current supply, each cycle consisting of a 2-second application of DC voltage of 8V to the heater (during this period, the heater temperature reaches 1,100°C maximum) and a 10-second pause of the application (during which, forced air cooling is made). Thus, the heater has excellent endurance against repeated current supply and can withstand quick and intermittent heating from room temperature to 1,100°C.

## Example 5

An $Al_2O_3$ powder having an average particle size of 0.5 µm and a $TaB_2$ powder having an average particle size of 2 µm were mixed in various ratios, and to each mixture there was further added a 3% PVA solution in an amount of 10% based on the whole amount of the mixture and mixed by a stirring kneader. Then the mixed powder was molded under a pressure of $9.80 \times 10^7$ $Nm^{-2}$ (1,000 kg/cm²) and this molding was placed in a graphite die and hot press sintered in a vacuum of 0.13 to $1.3 \times 10^{-3}$ $Nm^{-2}$ ($10^{-3}$ to $10^{-5}$ Torr) under the conditions of $1.95 \times 10^7$ $Nm^{-2}$ (200 kg/cm²), and 1,700°C for one hour. Each of the $Al_2O_3/TaB_2$ composite ceramic materials thus obtained was a dense sintered body having a relatively density above 95%. The relation between the resistivity of the ceramic materials and the mixed amount of $TaB_2$ is indicated by curve B in Fig. 1. It is thus found possible to obtain a ceramic materials having a desired resistivity within the range of 10 to $10^{-7}$ Ω · m by selecting an amount of $TaB_2$ greater than 20 parts by weight. The resistance-temperature coefficient of the ceramic materials, determined from the relation between their resistivity and temperature, is indicated by curve C in Fig. 2, which shows that these ceramic materials have a positive resistance-temperature coefficient in the region where the mixed amount of $TaB_2$ is greater than about 30 parts by weight.

## Example 6

A TaC of TaN powder (each having an average particle size of 2 µm) was mixed in various amounts with the $Al_2O_3$ powder used in Example 1, and the mixtures were molded and hot press sintered under the same conditions as Example 1 to make $Al_2O_3/TaC$ and $Al_2O_3/TaN$ composite ceramic materials. The relation between the resistivity and amount of electroconductive material of both types of composite ceramic material was substantially that shown by curve B in Fig. 1. Ceramic materials having a positive resistance-temperature coefficient were obtained by mixing TaC or TaN in a greater amount than about 30 parts by weight as in the case of Example 5.

## Example 7

50 parts by weight of an $Al_2O_3$ powder (average particle size: 0.5 µm) and 50 parts by weight of a $TaB_2$ powder (average particle size: 2 µm) were mixed, and to this mixture were added an $Al_2O_3$ powder (average particle size: 2 µm) and an MgO powder (average particle size: 2 µm) in amounts of 2% by weight and 0.5% by weight, respectively, based on the total amount of the mixture, and the mixed powder was compression molded under a pressure of $9.80 \times 10^7$ $Nm^{-2}$ (1,000 kg/cm²) and then hot press sintered under conditions of $1.95 \times 10^7$ $Nm^{-2}$ (200 kg/cm²), and 1,600°C for one hour (retention time) to form a composite ceramic material. This composite ceramic material had a relative density of 95%, a resistivity of $5 \times 10^{-5}$ Ωm at room temperature, a resistance-temperature coefficient (20—500°C) of +1.5%/°C and a bending strength of $2 \times 10^5$ kgm$^{-2}$ ($1.96 \times 10^6$ Nm$^{-2}$). It was thus dense, high in mechanical strength and low in electrical resistance and hence electroconductive.

Example 8

A U-shaped heater (resistance: 0.1 Ω; resistivity: $4\times10^{-5}$ Ω · m) was made by using the electroconductive ceramic material obtained in Example 7. The heater terminal voltage $V_H$, current $I_H$ and heater end temperature $T_H$ at the time of application of a DC voltage of 12 V to the heater terminals 3 and 4, are shown in Fig. 4, from which it will be seen that the heater end temperature rose to 900°C in about 0.7 second, 1,200°C in about one second and 1,500°C in about 1.5 second, which indicates the rapid heating characteristic of the heater. It also had a positive resistance-temperature characteristic, that is, the current applied to the heater decreases as the heater temperature increases upon connection to power. This is a particularly advantageous property in a heater material because it prevents the heater fusing and other troubles due to thermal-runaway.

Also, the heater according to this Example showed no change of resistivity even after 100,000 cycles of repeated current supply, each cycle consisting of a 2-second application of DC 8 V to the heater (during this period, the heater temperature reaches 1,100°C maximum) and a 10-second pause of the application (during which, forced air cooling is made). Thus, this heater has excellent endurance to repeated current supply and can withstand quick and intermittent heating from room temperature to 1,100°C.

Example 9

An $Al_2O_3$ powder having an average particle size of 0.5 μm and a $TiB_2$ powder having an average particle size of 2 μm were mixed in various ratios, and to each mixture there was added a 3% PVA solution in an amount of 10% based on the total amount of the mixture and mixed by a stirring kneader. Then the mixed powder was molded under a pressure of $9.80\times10^7$ $Nm^{-2}$ (1,000 kg/cm²), and the molding was placed in a graphite die and subjected to hot press sintering in a vacuum of 0.13 to $1.3\times10^{-3}$ $Nm^{-2}$ ($10^{-3}$ to $10^{-5}$ Torr) under conditions of $1.95\times10^7$ $Nm^{-2}$ (200 kg/cm²), and 1,700°C for one hour. Each of the resultant $Al_2O_3/TiB_2$ composite ceramic materials was a dense sintered body having a relative density of 95%. The relation between the resistivity of the ceramic materials and the amount of $TiB_2$ is indicated by curve A in Fig. 1. It is thus found possible to obtain ceramic materials having a desired resistivity within the range of 10 to $10^{-7}$ Ω · m by suitably selecting the amount of $TiB_2$ to be not less than 20 parts by weight. The resistance-temperature coefficient can be determined from the relation between a ceramic materials resistivity and its temperature as shown by curve E in Fig. 2, from which it is noted that ceramic materials have a positive resistance-temperature coefficient when the amount of $TiB_2$ is more than about 30 parts by weight.

Example 10

A TiC or TiN powder (each having an average particle size of 2 μm) was mixed in various amounts with the $Al_2O_3$ powder used in Example 9, and the mixtures were molded and hot press sintered under the same conditions as Example 9 to produce $Al_2O_3/TiC$ and $Al_2O_3/TiN$ composite ceramic materials. The relation between the resistivity and amount of the electroconductive material in both types of composite ceramic material was substantially that shown by curve A in Fig. 1. Ceramic materials having a positive resistance-temperature characteristic were obtained by mixing TiC or TiN in an amount greater than about 30 parts by weight as in the case of Example 9.

Example 11

50 parts by weight of $Al_2O_3$ powder (average particle size: 0.5 μm) and 50 parts by weight of $TiB_2$ powder (average particle size: 2 μm) were mixed, and to this mixture were further added an $Al_2O_3$ powder (average particle size: 2 μm) and an MgO powder (average particle size: 2 μm) in amounts of 2% by weight and 0.5% by weight, respectively, based on the total amount of the mixture, and the mixed powder was compression molded under a pressure of $9.80\times10^7$ $Nm^{-2}$ (1,000 kg/cm²) and then hot-press sintered under conditions of $1.95\times10^7$ $Nm^{-2}$ (200 kg/cm²), and 1,600°C for one hour (retention time) to prepare a composite ceramic material. This composite ceramic material had a relative density of 95%, a resistivity of $2.5\times10^{-5}$ Ωm at room temperature, a resistance-temperature coefficient (20—500°C) of +2.5%/°C and a bending strength of $2.5\times10^7$ $kgm^{-2}$. It was thus dense, high in mechanical strength and low in electrical resistance.

Example 12

A U-shaped heater (resistance: 0.1 Ω; resistivity: $4\times10^{-5}$ Ω · m as shown in Fig. 3 was made by using the electroconductive ceramic material obtained in Example 11. The heater terminal voltage $V_H$, current $I_H$ and heater end temperature $T_H$ at the time of application of DC 12 V to the heater terminals 3 and 4, are shown in Fig. 4. As seen from the graph, the heater end temperature rose to 900°C in about 0.7 second, 1,200°C in about one second and 1,500°C in about 1.5 second, indicating the rapid heating characteristic of this heater. This heater also had a positive resistance-temperature characteristic, that is, the current applied to the heater decreases as the heater temperature increases upon connection to power. This property is particularly advantageous in a heater material because it helps to prevent fusing of the heater and other troubles due to thermal-runaway.

Also, the heater according to this Example showed no change of resistivity even after 100,000 cycles of repeated current supply, each cycle consisting of a 2-second application of DC 8 V to the heater (during this period, the heater temperature reaches 1,100°C maximum), and a 10-second pause of the application (during which, forced air cooling is made). Thus, this heater has excellent endurance to repeated current supply and can withstand quick and intermittent heating from room temperature to 1,100°C.

## Claims

1. The use of an electroconductive sintered ceramic material as a ceramic heater for ignition or gasification, the ceramic material comprising:

(a) 5 to 70 parts by weight of alumina or an aluminous ceramic containing at least 95% by weight of $Al_2O_3$, and

(b) 30 to 95 parts by weight of an inorganic compound which exhibits a positive resistance-temperature coefficient, and which is selected from the group consisting of $ZrB_2$, ZrC, ZrN, $TaB_2$, TaC, TaN, $TiB_2$, TiC, and TiN.

2. The use of an electroconductive sintered ceramic material according to claim 1, which has an electrical resistivity of $10^{-2}$ $\Omega m$ or below at room temperature and a positive resistance-temperature coefficient.

## Patentansprüche

1. Verwendung eines gesinterten, elektrisch leitenden, keramischen Materials als keramischer Heizer zum Entzünden oder Vergasen, wobei das keramische Material enthält:

(a) 5 bis 70 Gewichtsanteile an Tonerde oder einer Tonerde-haltigen Keramik, die wenigstens 95 Gew.-% an $Al_2O_3$ enthält, und

(b) 30 bis 95 Gewichtsanteile einer anorganischen Verbindung, die einen positiven Widerstands-Temperaturkoeffizienten aufweist, und die aus der $ZrB_2$, ZrC, ZrN, $TaB_2$, TaC, TaN, $TiB_2$, TiC und TiN umfassenden Gruppe ausgewählt ist.

2. Verwendung eines elektrisch leitenden, gesinterten Keramikmaterials nach Anspruch 1, das bei Raumtemperatur einen elektrischen Widerstand von $10^{-2}$ $\Omega$ m oder weniger und einen positiven Widerstands-Temperaturkoeffizienten besitzt.

## Revendications

1. Utilisation d'une matière céramique frittée électroconductrice en tant que réchauffeur en céramique pour l'allumage ou la gazéification, la matière céramique comprenant:

(a) 5 à 70 parties en poids d'alumine ou d'une céramique alumineuse contenant au moins 95% en poids de $Al_2O_3$, et

(b) 30 à 95 parties en poids d'un composé inorganique qui présente un coefficient positif résistance-température et qui est choisi dans le groupe consistant en $ZrB_2$, ZrC, ZrN, $TaB_2$, TaC, TaN, $TiB_2$, TiC et TiN.

2. Utilisation d'une matière céramique frittée électroconductrice selon la revendication 1, qui a une résistivité électrique de $10^{-2}$ ohm-mètre au moins à température ambiante et un coefficient résistance-température positif.

## FIG. 1

LOG $\rho$ ($\Omega$cm) vs AMOUNT OF ZrB$_2$ (PARTS BY WEIGHT)

## FIG. 2

RESISTANCE–TEMPERATURE COEFFICIENT (% / C) vs AMOUNT OF ZrB$_2$ (PARTS BY WEIGHT)

1

# FIG. 3

(a)

(b)

# FIG. 4

HEATER END TEMPERATURE $T_H$ (°C)

CURRENT $I_H$ (A)

TERMINAL VOLTAGE $V_H$ (V)

$T_H$

$I_H$

$V_H$

TIME OF CURRENT
SUPPLY (sec)